# EUROPEAN PATENT APPLICATION

(11) **EP 2 042 984 A1**
(43) Date of publication of application: **01.04.2009**
(21) Application number: 08014631.9
(22) Date of filing: 18.08.2008
(51) Int. Cl.: G06F 9/44

(54) **Software product line analyzer**

(30) Priority: 28.09.2007 JP 2007252965
(71) Applicant: Hitachi, Ltd., Chiyoda-ku Tokyo (JP)
(72) Inventor: Yoshimura, Kentaro, Tokyo 100-8220 (JP); Narisawa, Fumio, Tokyo 100-8220 (JP); Hashimoto, Koji, Tokyo 100-8220 (JP); Morita, Yuichiro, Tokyo 100-8220 (JP); Suzuki, Hideaki, Tokyo 100-8220 (JP)
(74) Representative: Beetz & Partner

(57) **Abstract**

A software-product line analyzer including change history data (1), a change-history processing unit (2), a factor analysis unit (3), a variability analysis unit (4), and configuration information data (5), i.e., output data, wherein the change-history processing unit (2) converts the change history data (1) into numerical values, the factor analysis unit (3) performing a factor analysis using inter-products change information as observation data, and, based on each factor and each factor score determined, the variability analysis unit (4) determining variabilities in the software-product line and software components corresponding thereto, and outputting the configuration information data (5).

## Description

### BACKGROUND OF THE INVENTION

The present invention relates to a software analyzer for analyzing pre-developed software components. More particularly, it relates to a software analyzer for analyzing variabilities in a software-product line which includes a plurality of software products. Here, each of these software products is configured with a plurality of software components.

As the software analyzer, there is disclosed a technology for making the analysis with respect to pre-developed software assets using a key word, and outputting information about languages used therein, connectivity with the key word, and parent-child relationship between the respective software components (refer to, e.g., JP-Patent-No.-2740468).

Also, concerning the reuse of a software component, there is disclosed a technology about a software-components management system which makes it possible to confirm the presence or absence of compatibility with a conventionally-used software component (refer to, e.g., JP-A-2007-128450).

Also, as a software development technique, the following software-product-line-type development technology has been proposed: In this technology, with respect to an entire product line which includes a plurality of derivative software systems, attention is focused on common parts and variable parts within the product line. By doing this, the software systems are converted into software components. This software's conversion into the software components allows implementation of an enhancement in reusability of the software components (refer to, e.g., K. Yoshimura, "Products-Crossing Software Reuse Technology", IPSJ Magazine, Vol. 48, No. 2, pp. 171 to 176, Feb. 2007).

### SUMMARY OF THE INVENTION

As an application mode of the software technologies, there exists the so-called embedded software. This embedded software is embedded into its target appliances such as automobile and mobile telephone to control these appliances. In the control by the embedded software like this, the points that can be mentioned as its advantage are as follows: Flexible and high-level control can be implemented as compared with conventional mechanical mechanisms and schemes based on electrical circuits. Also, a large number of derivative products can be developed by changing the software.

Conventionally, an embedded software program was developed on each target-product basis. Otherwise, based on a similar product, a difference therebetween was developed. In accompaniment with an expansion of application range of the embedded software, however, there has occurred an increase in number of the derivative products and size of the software. This situation has strongly requested a significant enhancement in development efficiency of the embedded software.

In order to solve the above-described problem, as is indicated in JP-Patent-No.-2740468, there is disclosed the technology for providing the database of the pre-developed software components, and permitting the pre-developed software components to be referred to based on key words which indicate characteristics of software-product lines. No consideration, however, has been given to a point of how to extract a group of the software components which can be summarized using a certain specific key word.

Also, in JP-A-2007-128450, there is disclosed the technology which makes it possible to confirm the presence or absence of the compatibility between the software components when making the reuse of the products-crossing software component. The present technology, however, still remains at a stage of comparison between the software components. Namely, no consideration has been given to comparison of the software assets between the products.

Also, in K. Yoshimura, "Products-Crossing Software Reuse Technology", IPSJ Magazine, Vol. 48, No. 2, pp. 171 to 176, Feb. 2007, the software-product-line-type development technology has been proposed as a software development technique. According to the present technology, the above-described assertion is given: With respect to an entire product line which includes a plurality of derivative software systems, attention is focused on common parts and variable parts of function requirements of the product line. By doing this, the software systems are converted into software components. This software's conversion into the software components allows implementation of an enhancement in the reusability of the software components and an enhancement in the development efficiency of the products. However, in a product line like this which includes a large number of derivative products, the number of the function requirements has already become enormous. Here, since the function requirements are described in a natural language, the analysis of the commonalities and variabilities needs to be made by man power. As a result, there occurs a problem that analyzing the enormous number of function requirements by man power is far from easy.

It is an object of the present invention to solve the above-described problems, and to provide a software-product line analyzer which is capable of automatically analyzing a group of software components which have reflected variabilities of the software between the software products.

There is provided a software-product line analyzer for outputting configuration information on a software-product line by analyzing the software-product line, the software-product line including a plurality of software products each of which is configured with a plurality of software components, the software-product line analyzer including a change-history processing unit for performing a change-history numerical-value conversion processing based on change history in the software-product line, a factor analysis unit for performing a factor analysis using the change history, and determining any one of at least each factor, eigen value of each factor, cumulative value of each factor, each factor coefficient, and each factor score, the change history being converted into numerical values by the change-history processing unit, and a variability analysis unit for determining variation points in the software-product line and software components corresponding thereto by using the analysis result of the factor analysis unit.

According to the present invention, the change history of software components configuring a software-product line is converted into numerical values, then being subjected to the factor analysis. This analysis process makes it possible to extract a group of software components which had been changed at the time of the product development. Accordingly, it becomes possible to automatically analyze the group of the software components which have reflected the variabilities of the software between the software products.

The present invention can be applied to a software product which is configured with a plurality of software components.

Other objects, features and advantages of the invention will become apparent from the following description of the embodiments of the invention taken in conjunction with the accompanying drawings.

### BRIEF DESCRIPTION OF THE DRAWINGS

Fig. 1 is a diagram for illustrating a configuration example of the software-product line analyzer according to an embodiment of the present invention;
Fig. 2 is a diagram for illustrating the change history in a software-product line;
Fig. 3 is a flowchart for illustrating a flow of the change-history numerical-value conversion processing performed by the change-history processing unit;
Fig. 4 is a flowchart for illustrating a flow of the change-history numerical-value conversion processing based on binary-value conversion;
Fig. 5 is a diagram for illustrating the product-line change history which is converted into the numerical values;
Fig. 6 is a flowchart for illustrating a flow of the change-history numerical-value conversion processing based on change row number;
Fig. 7 is a diagram for illustrating a configuration example of the software-product line analyzer which is equipped with a communications unit with a software-version management system;
Fig. 8 is a diagram for illustrating configuration of analysis data in the factor analysis according to the embodiment of the present invention;
Fig. 9 is a diagram for illustrating eigen value and cumulative ratio of each factor obtained as a result of the factor analysis;
Fig. 10 is a diagram for illustrating factor score of SWC with respect to each factor;
Fig. 11 is a flowchart for illustrating a flow of the variability analysis processing performed by the variability analysis unit;
Fig. 12 is a flowchart for illustrating a flow of the factors' number judgment processing performed by the factors'number judgment unit;
Fig. 13 is a flowchart for illustrating a flow of the correspondence-relationship analysis processing between each factor and each software component performed by the correspondence-relationship analysis unit; and
Fig. 14 is a diagram for illustrating variability information on the software-product line analyzed by the present invention.

### DETAILED DESCRIPTION OF THE INVENTION

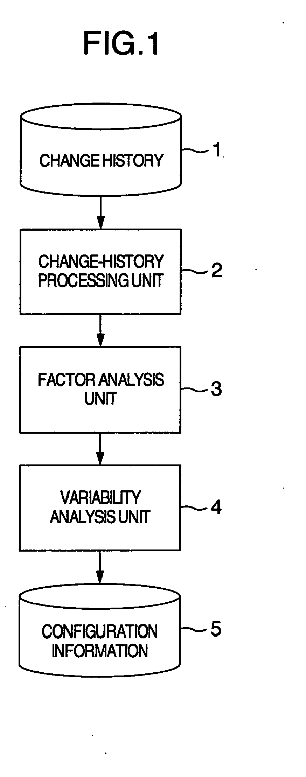

Hereinafter, referring to the drawings, the explanation will be given below concerning a software-product line analyzer according to an embodiment of the present invention. Fig. 1 is a diagram for illustrating the outline of a system configuration example of the software-product line analyzer according to the embodiment of the present invention. As illustrated in Fig. 1, the software-product line analyzer according to the present embodiment includes change history data 1, a change-history processing unit 2, a factor analysis unit 3, a variability analysis unit 4, and configuration information data 5.

The change history data 1 is input data into the present analyzer. In association with a software product which is configured with a plurality of software components, the change history data 1 includes information on software components which configure each software product, and information on version numbers of the software components. Incidentally, what is referred to here as "a software product which is configured with a plurality of software components" concretely means, e.g., a software product to which the object-oriented or component-oriented architecture pattern is applied. Also, the change history data 1 includes, as its targets, not only software which operates on PCs, but also the so-called embedded software which operates in a manner of being combined with certain specific appliances, such as automobile-engine-control purpose software and digital-household-appliances purpose software.

The change-history processing unit 2 performs numerical-value conversion of the change history, using the change history data 1.

The factor analysis unit 3 performs a factor analysis, i.e., one of the multivariate analysis techniques, using the change history data 1 which is converted into numerical values by the change-history processing unit 2. In the factor analysis, the quantity that should be determined is any one of at least eigen value, contribution ratio, factor loading, factor score, and factor coefficient each of which corresponds to each factor. Incidentally, in the present embodiment, as calculation methods in the factor analysis, principal factor method will be used for the calculation of the factor loading, and orthogonal rotation (varimax method) will be used as the rotation method. Here, however, least-squares method or maximum likelihood method may be used for the calculation of the factor loading, and another orthogonal rotation or oblique rotation (e.g., promax method) may be used as the rotation method.

Based on the result of the factor analysis calculated by the factor analysis unit 3, the variability analysis unit 4 determines factors corresponding to variabilities between the software products which occur in the software-product line, and software components corresponding to the respective factors.

The employment of the above-described configuration permits the variabilities in the entire software-product line and the software components corresponding to the variabilities to be determined based on the change record of the software products in the past, and also based on assistance by computer. For example, in the case of a software-product line including one thousand types of software products each of which is configured with one thousand software components, it takes an exceedingly long time to analyze a change pattern in the software-product line by man power. In addition thereto, it is impossible to determine by man power the correlation relationship of change patterns between different software components. On the other hand, in the software-product line analyzer according to the present embodiment, the variability analysis within the software-product line is made after the factor analysis has been made by converting the change history of the software products into the numerical values. Consequently, the present software-product line analyzer is suitable for the analysis of the variabilities based on the change history in the past.

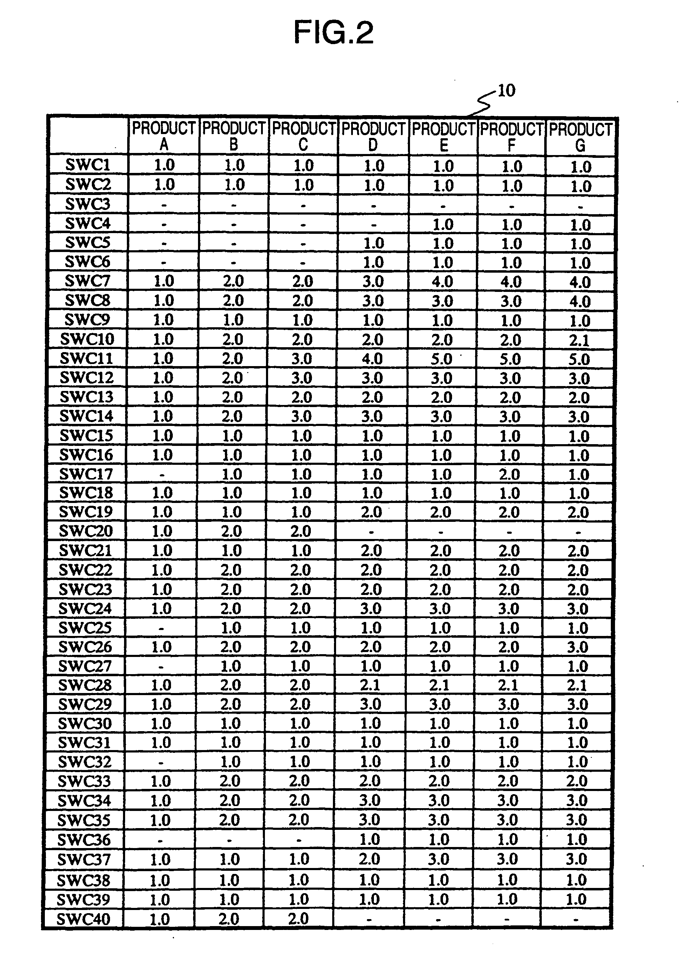

Fig. 2 is a diagram for illustrating a concrete example of the change history 1 according to the present embodiment. The change history data 10 includes a correspondence relationship between pre-developed and under-development software products (i.e., product A to product G) and versions of software components (each of which, hereinafter, will be referred to as "SWC": Software Component) which configure these software products. Incidentally, a portion represented as "-" in the drawing like SWC3 in the product A indicates that this product does not include the corresponding SWC.

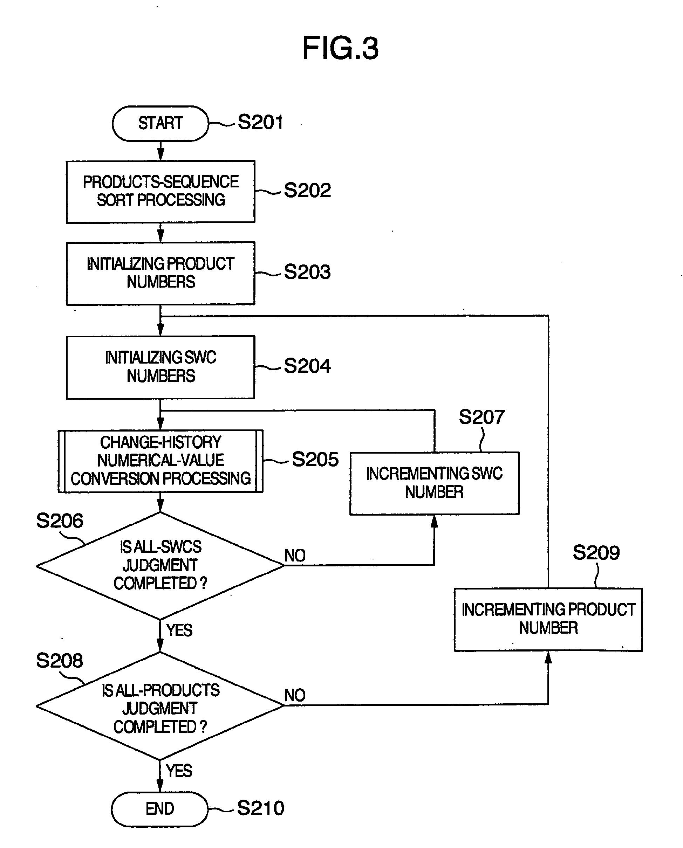

Fig. 3 is a flowchart for illustrating a flow of the change-history numerical-value conversion processing performed by the change-history processing unit 2. This processing is started from a step S201. Next, at a step S202, a sort processing of sorting the software products is performed. Namely, sorting the configuration information on the software products is performed based on any one of development start time-and-date, development termination time-and-date, and product shipment time-and-date. Then, product numbers are assigned to the software products in accordance with the sorting sequence obtained at the step S202. At a step S203, an initialization processing for the product numbers of the processing targets is performed, then inputting the initial values. At a step S204, an initialization processing for the SWC numbers of the processing targets is performed, then inputting the initial values. Moreover, at a step S205, the change-history numerical-value conversion processing is performed. Furthermore, at a step S206, it is checked whether or not the numerical-value conversion processing has been completed with respect to all of the SWCs. If the processing has been not completed (: No), the processing unit 2 proceeds to a step S207. Meanwhile, if the processing has been completed (: Yes), the unit 2 proceeds to a step S208. At the step S207, the unit 2 increments the SWC number, then continuing the processing. At the step S208, it is checked whether or not the numerical-value conversion processing has been completed with respect to all of the software products. If the processing has been not completed (: No), the unit 2 proceeds to a step S209. Meanwhile, if the processing has been completed (: Yes), the unit 2 proceeds to a step S210, where the unit 2 terminates the processing. At the step S209, the unit 2 increments the product number, then continuing the processing.

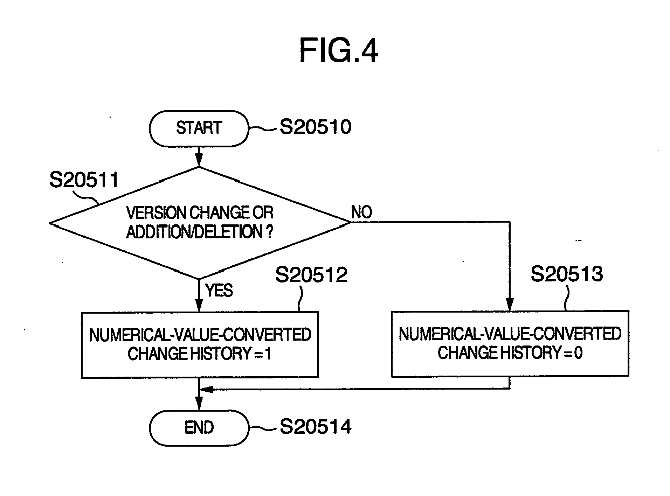

Fig. 4 is a flowchart diagram in a case where, as the change-history numerical-value conversion processing at the step S205, the change history is converted into binary-value data. This processing is started from a step S20510. Next, at a step S20511, a product to which a certain specific product number is assigned (this number assignment is based on the processing result at the step S202) is compared with the product whose product number is one number earlier than that. By making this comparison, it is checked whether or not versions of software components which configure the product have been changed, or whether or not a software component has been added to or deleted from the product. If the version of a software component has been changed, or if a software component has been added thereto or deleted therefrom (: Yes), the processing unit 2 proceeds to a step S20512. If not (: No), the unit 2 proceeds to a step S20513. At the step S20512, the unit 2 substitutes 1 as the change history. At the step S20513, the unit 2 substitutes 0 as the change history. Moreover, at a step S20514, the unit 2 terminates the processing.

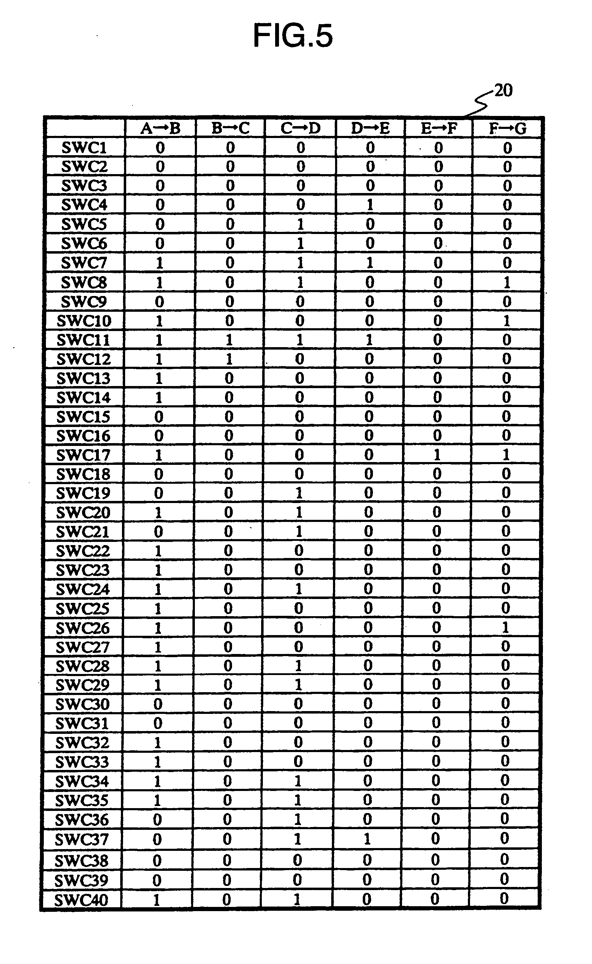

Fig. 5 is a diagram for illustrating a numerical-value-converted change history 20 which has resulted from the binary-value conversion. A significant difference between the change history 10 before being converted into the numerical values and the numerical-value-converted change history 20 is that a term in the column direction has become a difference between the software products like, e.g., "product A → product B". Here, how to understand the numerical-value-converted change history 20 is as follows: For example, "SWC 1" with respect to "A → B" is "0". This corresponds to the following fact: In the change history 10 before being converted into the numerical values, the version of the SWC 1 is "1.0" with respect to both of the product A and the product B. Accordingly, no change has existed. Also, "SWC 11" with respect to "B → C" is "1". This corresponds to the following fact: In the change history 10 before being converted into the numerical values, the version of the SWC 11 is "2.0" in the product B, and "3.0" in the product C. Accordingly, the SWC 11 has been changed in the change from the product B to the product C.

By executing the above-described change-history numerical-value conversion processing, it becomes possible to convert the change history, i.e., the version information on the software components which configure each product, into the numerical-value-converted change history where the differences between the software products are expressed as the numerical values. This conversion allows implementation of execution of the multivariate analysis based on the factor analysis.

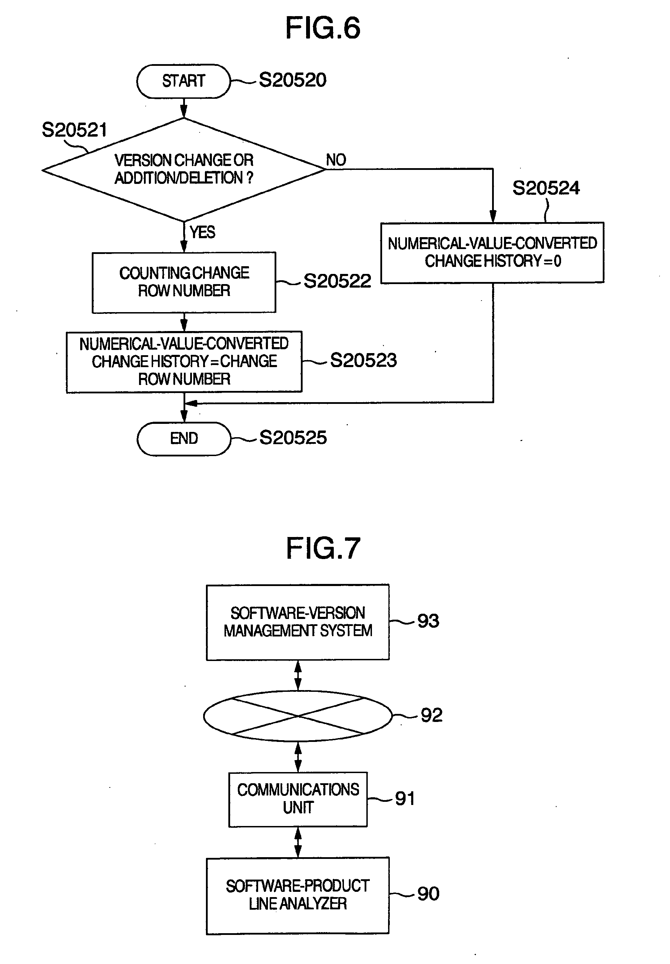

Fig. 6 is a flowchart diagram in a case where, as the change-history numerical-value conversion processing at the step S205, the numerical-value conversion processing is performed based on software-components change row number between the software products. This processing is started from a step S20520. Next, at a step S20521, a product to which a certain specific product number is assigned (this number assignment is based on the processing result at the step S202) is compared with the product whose product number is one number earlier than that. By making this comparison, it is checked whether or not versions of software components which configure the product have been changed, or whether or not a software component has been added to or deleted from the product. If the version of a software component has been changed, or if a software component has been added thereto or deleted therefrom (: Yes), the processing unit 2 proceeds to a step S20522. If not (: No), the unit 2 proceeds to a step S20524. At the step S20522, the unit 2 counts the software-components change row number. At a step S20523, the unit 2 substitutes the counted change row number as the change history. At the step S20524, the unit 2 substitutes 0 as the change history. Moreover, at a step S20525, the unit 2 terminates the processing.

By executing the above-described change-history numerical-value conversion processing based on the software-components change row number, it becomes possible to express the change history as the numerical values on the basis of the size of the software-components change between the software products.

Fig. 7 is a diagram for illustrating the configuration of a system where the software-product line analyzer according to the present invention is connected to a software-version management system. The software-version management system 93 had managed configuration and versions of software components at the time of the development of a software product. As a concrete example, Subversion and CVS have been known. Since the software-version management system 93 is used in project-type developments by a plurality of engineers, the system 93 is connected to a network 92. A communications unit 91 establishes the connection with the network 92 to communicate with the software-version management system 93, thereby acquiring information on software components which configure a software product, and version information on the software components. The software-product line analyzer 90 acquires the information on software components which configure a software product, and the version information on the software components, thereby making the software-product line analysis.

The employment of the above-described configuration permits the change history necessary for making the software-product line analysis to be acquired from the software-version management system which had managed and operated the change history at the time of the development of the software products. Consequently, it becomes possible to automatically acquire the data which is inconsistent with the actual software products.

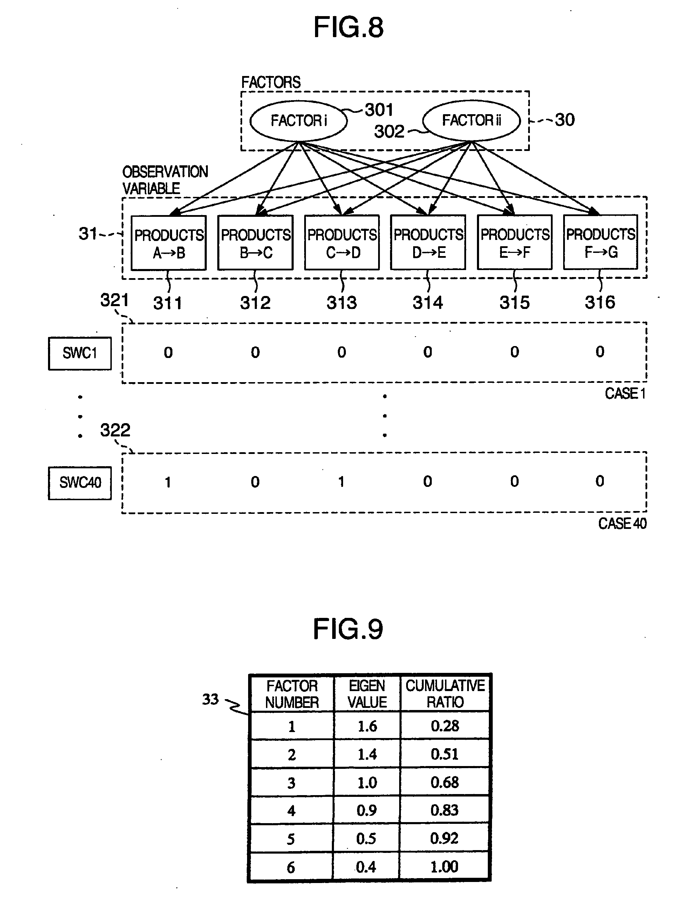

Fig. 8 is a diagram for illustrating configuration of analysis data in the factor analysis to be executed by the factor analysis unit 3. In the factor analysis in the present invention, factors 30 (301, 302), which have exerted influences on the product change, are revealed by dealing with the change history (311, 312, 313, 314, 315, and 316) between the products as the observation variable 31. Moreover, when making the calculation based on the factor analysis, the numerical-value-converted change histories (321 and 322) of the respective software components are dealt with as cases (1, 40) for the observation variable 31.

By arranging and defining the analysis data as described above, it becomes possible to analyze, by the multivariate analysis, the change which has occurred between the software products. This multivariate analysis allows implementation of determination of the factors which have exerted influences on the change in the software-product line including the plurality of software products.

Fig. 9 is a diagram for illustrating a calculation result (I) 33 of eigen value and cumulative ratio of each factor in the present embodiment.

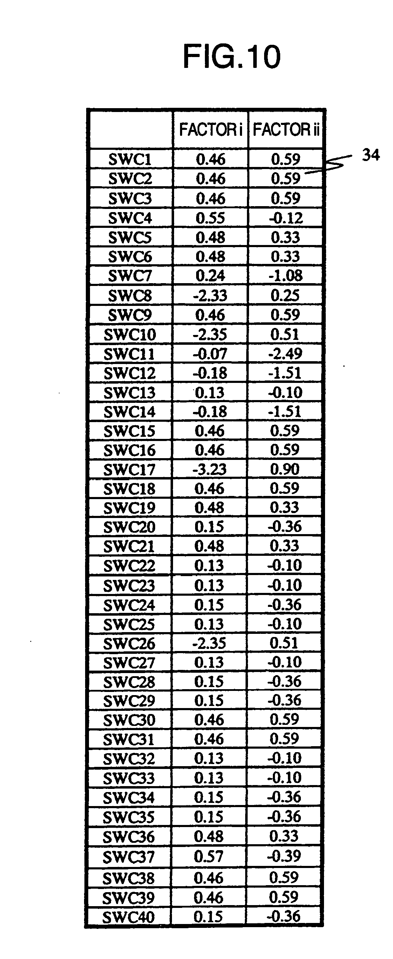

Fig. 10 is a diagram for illustrating a calculation result (II) 34 of factor score of each factor with respect to each SWC. Here, only the factor i and factor ii are described, and factors iii, iv, v, and vi are omitted.

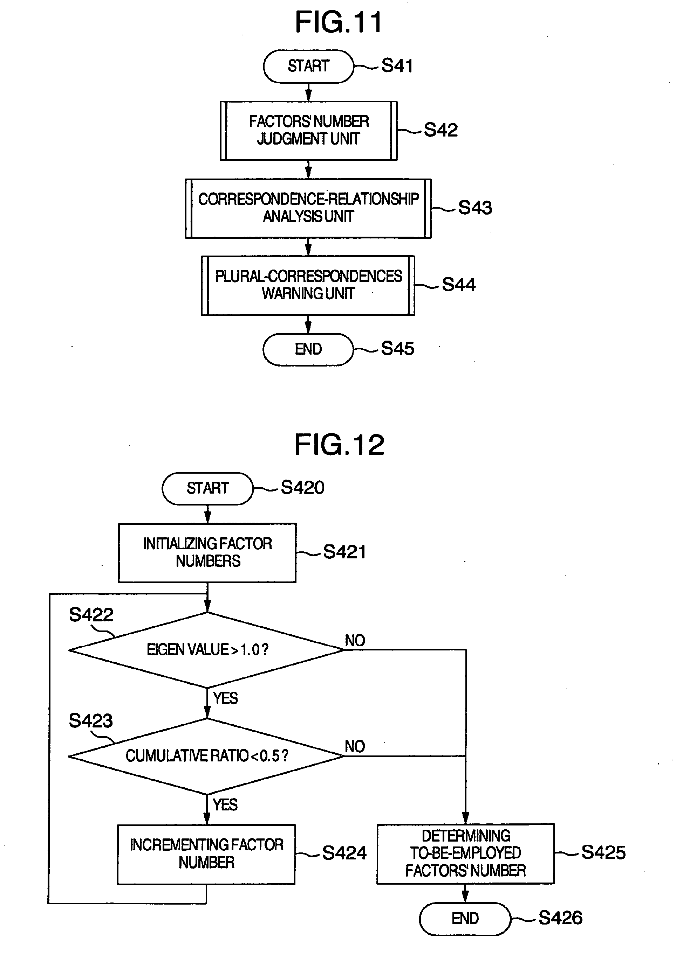

Fig. 11 is a flowchart diagram for illustrating details of the variability analysis processing performed by the variability analysis unit 4. This processing is started from a step S41. A step S42 is a factors' number judgment unit for judging the number of the factors which are to be employed. A step S43 is a correspondence-relationship analysis unit for analyzing correspondence between each factor and each SWC. A step S44 is a plural-correspondences warning unit for checking whether or not plural factors correspond to a single SWC, and issuing a warning if this is the case.

Fig. 12 is a flowchart diagram for illustrating details of the factors' number judgment unit S42. This processing is started from a step S420. Next, at a step S421, factor numbers are initialized. Incidentally, in the present processing, it is assumed that the factors are arranged in the descending order of the eigen values as is indicated in the calculation result (I) 33. Moreover, at a step S422, it is checked whether or not the eigen value of each factor is larger than a specific value (which is 1.0 in the present embodiment). If the eigen value is larger than that (: Yes), the judgment unit S42 proceeds to a step S423. Meanwhile, if the eigen value is smaller (: No), the judgment unit S42 proceeds to a step S425. At the step S423, it is checked whether or not the cumulative ratio of each factor is smaller than a specific value (which is 0. 5 in the present embodiment). If the cumulative ratio is smaller than that (: Yes), the judgment unit S42 proceeds to a step S424. Meanwhile, if the cumulative ratio is larger (: No), the judgment unit S42 proceeds to the step S425. At the step S424, the judgment unit S42 increments the factor number, then continuing the processing. The step S425 is a to-be-employed factors' number determination processing, where the present factor number is employed as the factors' number. Furthermore, at a step S426, the judgment unit S42 terminates the processing.

In this way, by determining the factors' number on the basis of the result of the factor analysis, it becomes possible to quantitatively determine the number of the variabilities which can be determined from the change history. This quantitative determination allows implementation of execution of the objective analysis where human-dependent property is excluded.

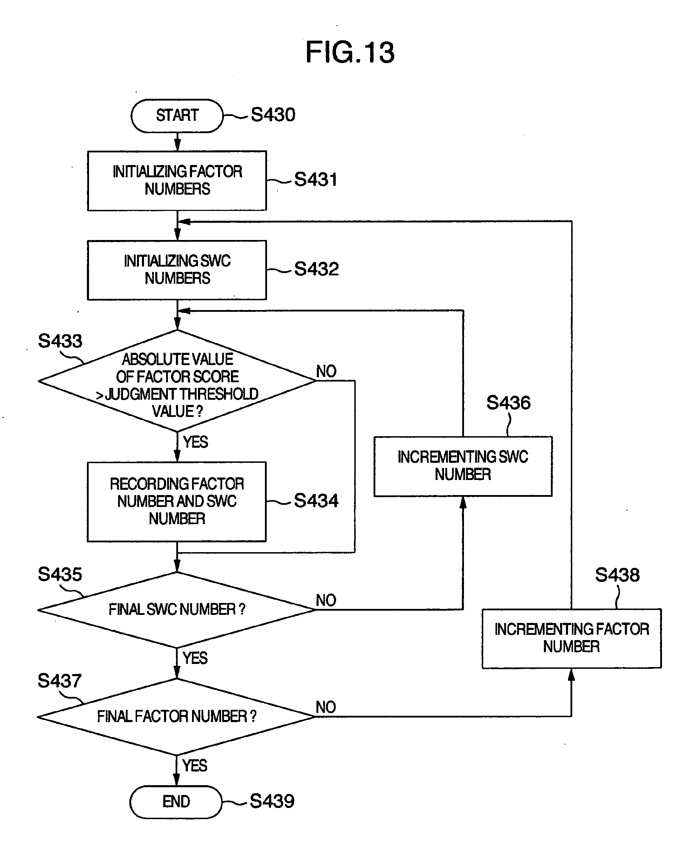

Fig. 13 is a flowchart diagram for illustrating details of the correspondence-relationship analysis unit S43. This processing is started from a step S430. Next, at a step S431, initializing the factor numbers is performed. At a step S432, initializing the SWC numbers is performed. Moreover, at a step S433, it is checked whether or not the absolute value of the factor score (illustrated in Fig. 10) corresponding to the present factor number and SWC number is larger than a judgment threshold value. If the factor score is larger than that (: Yes), the analysis unit S43 proceeds to a step S434. Meanwhile, if the factor score is smaller (: No), the analysis unit S43 proceeds to a step S435. At the step S434, the analysis unit S43 records the present factor number and SWC number as the correspondence data. At the step S435, it is checked whether or not the present SWC number is the final number. If the present SWC number is the final number (: Yes), the analysis unit S43 proceeds to a step S437. If not (: No), the analysis unit S43 proceeds to a step S436. At the step S436, the analysis unit S43 increments the SWC number, then continuing the processing. At the step S437, it is checked whether or not the present factor number is the final number. If the present factor number is the final number (: Yes), the analysis unit S43 proceeds to a step S439, then terminating the processing. If not (: No), the analysis unit S43 proceeds to a step S438. At the step S438 the analysis unit S43 increments the factor number, then continuing the processing.

In this way, by establishing the correspondences between the factors, i.e., the variabilities, and the software components on the basis of the factor score, it becomes possible to extract only the software components which have significantly undergone the influences exerted by the respective variabilities, and to implement a grouping of these software components influenced.

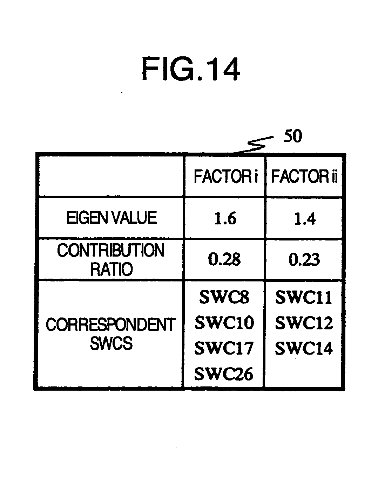

Fig. 14 is a diagram for illustrating details of data on the variation points in the software-product line, which will be outputted as the configuration information data 5. In the analysis result 50 according to the present embodiment, the two factors are extracted as the variation points. Employing the factor i as the example, its eigen value is equal to 1.6, and its contribution ratio to the change history in the past is equal to 0.28. The software components corresponding to this variation point are the SWC8, SWC10, SWC17, and SWC26.

As having been explained in the foregoing description, according to the software-product line analyzer in the present embodiment, the change history of software components configuring a software-product line is converted into numerical values, then being subjected to the factor analysis. This analysis process makes it possible to extract a group of software components which had been changed at the time of the individual product development. As a consequence, there exists an advantage of being capable of automatically analyzing the group of the software components which have reflected the variabilities of the software between the software products.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A software-product line analyzer for outputting configuration information (5) on a software-product line by analyzing said software-product line, said software-product line including a plurality of software products each of which is configured with a plurality of software components,
said software-product line analyzer, comprising:
change-history processing means (2) for performing a change-history numerical-value conversion processing based on change history (1) in said software-product line;
factor analysis means (3) for performing a factor analysis using said change history (1), and determining any one of at least each factor, eigen value of each factor, cumulative value of each factor, each factor coefficient, and each factor score, said change history (1) being converted into numerical values by said change-history processing means (2); and
variability analysis means (4) for determining variation points in said software-product line and software components corresponding thereto by using said analysis result of said factor analysis means (3).

2. The software-product line analyzer according to Claim 1, wherein
said change history (1) in said software-product line is version information on said software components which configure each software product.

3. The software-product line analyzer according to Claim 2, wherein
said change-history processing means (2) converts said change history (1) in said software-product line into binary-value data, said binary-value data indicating whether or not said version of each software component has been changed between said software products.

4. The software-product line analyzer according to Claim 1, wherein
said change-history processing means (2) converts said change history (1) in said software-product line into row number of said software components changed between said software products.

5. The software-product line analyzer according to Claim 1, wherein
said change-history processing means (2) includes communications means (91) for establishing communications with a software-version management system (93).

6. The software-product line analyzer according to Claim 1, wherein
said factor analysis means (3) defines said change between said software products as an observation variable (31) when performing said factor analysis with respect to said change history (1), said change history (1) being converted into said numerical values by said change-history processing means (2),
said factor analysis means (3) also defining, as each case (1, 40), change in version number of each software component converted into said numerical values.

7. The software-product line analyzer according to Claim 6, wherein
said factor analysis means (3) determines number of said factors to be analyzed, based on said eigen value of each factor obtained by said factor analysis.

8. The software-product line analyzer according to Claim 6, wherein, using each factor and each factor score determined by said factor analysis means (3),
said variability analysis means (4) judges a factor to be said variation point in said software-product line, if there exists at least one software component in which absolute value of said factor score corresponding to said factor exceeds a constant value.

9. The software-product line analyzer according to Claim 8, wherein
said variability analysis means (4) analyzes and outputs a fact that a certain specific software component corresponds to a plurality of variation points.
